## Europäisches Patentamt

## European Patent Office

## Office européen des brevets

(11) Numéro de publication: **0 305 246 B1**

---

(12) **FASCICULE DE BREVET EUROPEEN**

---

(45) Date de publication du fascicule du brevet:
14.11.90

(21) Numéro de dépôt: **88401981.1**

(22) Date de dépôt: **29.07.88**

(51) Int. Cl.⁵: **F16F 13/00**

---

(54) **Perfectionnements aux supports antivibratoires hydrauliques.**

---

(30) Priorité: **03.08.87 FR 8711002**

(43) Date de publication de la demande:
**01.03.89 Bulletin 89/9**

(45) Mention de la délivrance du brevet:
**14.11.90 Bulletin 90/46**

(84) Etats contractants désignés:
**DE ES GB IT**

(56) Documents cités:
**EP-A- 0 088 682**
**EP-A- 0 154 828**
**EP-A- 0 163 162**
**FR-A- 2 555 273**

(73) Titulaire: **HUTCHINSON, 2 rue Balzac, F-75008 Paris(FR)**

(72) Inventeur: **Jouade, Pierre, 21, rue du Mont Barry La Fringale, F-28200 La Chapelle du Noyer(FR)**

(74) Mandataire: **Behaghel, Pierre, CABINET PLASSERAUD 84 rue d'Amsterdam, F-75009 Paris(FR)**

---

## Description

L'invention est relative aux dispositifs antivibratoires destinés à être interposés aux fins de support et d'amortissement entre deux éléments rigides individuellement soumis à certaines oscillations et/ou vibrations, l'amortissement faisant intervenir au moins dans certaines conditions de fonctionnement le refoulement d'un liquide à travers un passage étranglé.

A titre d'exemple non limitatif, on indique que de tels supports peuvent être montés entre un châssis de véhicule et le moteur à combustion interne de ce véhicule en vue d'amortir aussi bien les oscillations de "hachis" imposées au châssis par les irrégularités et variations de déclivité du sol lors de la circulation du véhicule sur ce sol que les vibrations dues au fonctionnement du moteur, notamment au ralenti.

L'invention concerne plus particulièrement, parmi les supports du genre en question, ceux qui sont constitués par un boîtier étanche interposé entre les deux éléments rigides, boîtier comportant une embase rigide solidarisable avec l'un des deux éléments rigides, un anneau rigide solidarisable avec l'autre élément rigide, une paroi élastique annulaire de support reliant de manière étanche l'embase à l'anneau et une membrane flexible raccordée de manière étanche à l'anneau, l'intérieur de ce boîtier étant divisé, par une cloison raccordée à l'anneau entre la paroi annulaire et la membrane, en deux chambres, savoir une chambre de travail du côté de la paroi annulaire et une chambre de compensation du côté de la membrane, ces deux chambres communiquant entre elles en permanence par le passage étranglé ci-dessus et une masse liquide remplissant les deux chambres ainsi que le passage étranglé.

L'invention vise plus particulièrement encore le cas où la cloison intermédiaire comprend une portion déformable ou mobile formant "clapet" flottant et des moyens pour limiter l'amplitude des débattements de ce clapet à une faible valeur, de préférence inférieure à 0,5 mm. Les supports de ce genre sont connus par exemple des documents FR-A 2 555 273 et EP-A 0 154 828.

Avec un tel support, les oscillations ou vibrations créées entre les deux éléments rigides ont pour effet de rapprocher et d'écarter axialement à tour de rôle ces deux éléments l'un de l'autre.

Celles, de ces oscillations, dites de "hachis", qui présentent une fréquence relativement basse (inférieure à 20 Hz) et une amplitude relativement élevée (supérieure à 0,5 mm), ont pour effet de refouler le liquide de l'une des deux chambres dans l'autre à travers le passage étranglé et inversement et, pour une valeur donnée de ladite fréquence dépendant essentiellement des cotes dudit passage, on observe un amortissement élevé des oscillations considérées par effet de résonance de la masse de liquide circulant dans ce passage.

Celles, desdites oscillations, qui présentent une fréquence relativement élevée (supérieure à 20 Hz) et une amplitude relativement faible (inférieure à 0,5 mm) se traduisent par des oscillations correspondantes du clapet sans qu'il y ait véritablement de transfert de liquide à travers le passage étranglé, ce qui a pour effet de filtrer la transmission des oscillations considérées de l'élément rigide où elles sont engendrées à l'autre élément rigide.

Pour simplifier, on supposera dans ce qui suit que l'ensemble du support et du clapet est de révolution autour d'un axe vertical ou sensiblement vertical.

Mais cette supposition n'est envisagée qu'à titre de simplification : l'invention n'exclut pas le cas où le support et/ou le clapet présenteraient des formes qui ne soient pas de révolution.

Dans les modes de réalisation connus des supports décrits ci-dessus, le pourtour du clapet est en général encadré axialement, avec ou sans jeu, par deux portées rigides faisant partie elles-mêmes de deux pièces annulaires distinctes serrées axialement par sertissage l'une contre l'autre en même temps que contre l'anneau rigide et que contre les bords de la paroi annulaire et de la membrane.

Ce mode de montage impose certaines servitudes du fait en particulier que le diamètre extérieur du clapet peut être très inférieur à celui des autres pièces annulaires à assembler mutuellement par sertissage.

Dans un mode de réalisation pour lequel le clapet était constitué par une membrane déformable étanche montée de façon étanche sur son siège, il a été proposé d'adhérer une face du pourtour de cette membrane sur la portée annulaire rigide formant ledit siège alors que l'autre face, de ce pourtour, portait une bague rigide adhérée sur cette face de manière à pouvoir flotter librement.

Cette réalisation est intéressante, mais la fixation par adhérence n'est pas toujours facile à exécuter ni à conserver dans le temps.

L'invention a pour but, surtout, de remédier à ces différents inconvénients.

A cet effet, les supports antivibratoires selon l'invention comprennent encore deux portées rigides encadrant axialement le pourtour du clapet et ils sont essentiellement caractérisés en ce que l'une de ces deux portées rigides est constituée par une rondelle métallique prenant appui radialement contre une face cylindrique interne d'une pièce annulaire rigide solidaire de l'autre portée, ladite rondelle étant constituée par un anneau plat prolongé vers l'extérieur par une couronne de pattes s'étendant sensiblement selon un tronc de cône et dimensionnée de façon telle que le contact entre ces pattes et la face cylindrique en regard fasse intervenir un léger fléchissement de celles-ci et un effet d'arcboutement.

Dans des modes de réalisation préférés, on a recours en outre à l'une et/ou à l'autre des dispositions suivantes :
- l'autre portée fait partie de la pièce annulaire rigide contre une face cylindrique interne de laquelle prend appui la rondelle,
- la rondelle métallique constitue la périphérie d'un disque perforé.

L'invention comprend, mises à part ces dispositions principales, certaines autres dispositions qui s'utilisent de préférence en même temps et dont il sera plus explicitement question ci-après.

Dans ce qui suit, l'on va décrire plusieurs modes de réalisation préférés de l'invention en se référant au dessin ci-annexé d'une manière bien entendu non limitative.

La figure 1, de ce dessin, montre en élévation, portion coupée axialement, un support antivibratoire établi selon l'invention.

La figure 2 montre la portion centrale de ce support en coupe transversale selon II-II, figure 1.

Les figures 3 et 4 montrent selon des coupes axiales partielles deux variantes de supports antivibratoires établis selon l'invention.

Dans chaque cas, le support considéré est destiné à être interposé verticalement ou selon une direction légèrement inclinée sur la verticale entre un organe porteur rigide et un organe supporté rigide: dans une application préférée qui sera retenue pour la description qui suit, l'organe porteur est un châssis de véhicule et l'organe supporté, le moteur à combustion interne de ce véhicule.

Les termes "haut, bas, supérieur, inférieur, cuvette", utilisés dans la description qui suit, le sont à titre d'exemple non limitatif car le support décrit peut parfaitement être utilisé à l'envers du sens adopté pour cette description.

Le support se présente sous la forme générale d'un boîtier étanche de révolution autour d'un axe X comportant :
- un anneau rigide 1 constitué par le bord d'une cuvette métallique renversée 2, elle-même susceptible de supporter le moteur à l'aide d'un goujon 3 en attente dont la tige filetée, s'étendant vers le haut, traverse le centre de ladite cuvette,
- une embase inférieure 4 elle-même solidarisée avec un goujon 5 en attente dont la tête filetée, s'étendant vers le bas, est propre à coopérer avec un écrou de fixation de cette embase sur le châssis de véhicule,
- une paroi annulaire élastique 6 suffisamment épaisse pour transmettre les charges du moteur au châssis, paroi délimitée en substance par deux surfaces tronconiques évasées vers le haut et dont la petite base, disposée en base, est adhérée contre l'embase 4, sa grande base supérieure étant raccordée de façon étanche à l'anneau 1.
- et une membrane supérieure étanche et flexible 7 contenue à l'intérieur de la cuvette 2, le bord de cette membrane étant fixé de façon étanche sur l'anneau 1.

Une cloison intermédiaire 8 diverse l'intérieur du boîtier ainsi formé en deux chambres, savoir une chambre de travail inférieure A et une chambre de compensation ou d'équilibrage supérieure B.

Le pourtour de la cloison 8 est à cet effet raccordé de façon étanche à l'anneau 1, entre la paroi épaisse 6 et la membrane 7.

Un passage étranglé 9 fait communiquer en permanence les deux chambres A et B entre elles.

Ce passage 9 est ici constitué par au moins un canal incurvé s'étendant selon un arc de cercle autour de l'axe X, canal évidé dans le pourtour de la cloison 8.

La portion centrale de cette cloison 8 est constituée par un disque rigide 10 ou 11 formant clapet, c'est-à-dire monté de façon à pouvoir se déplacer selon la direction de l'axe X.

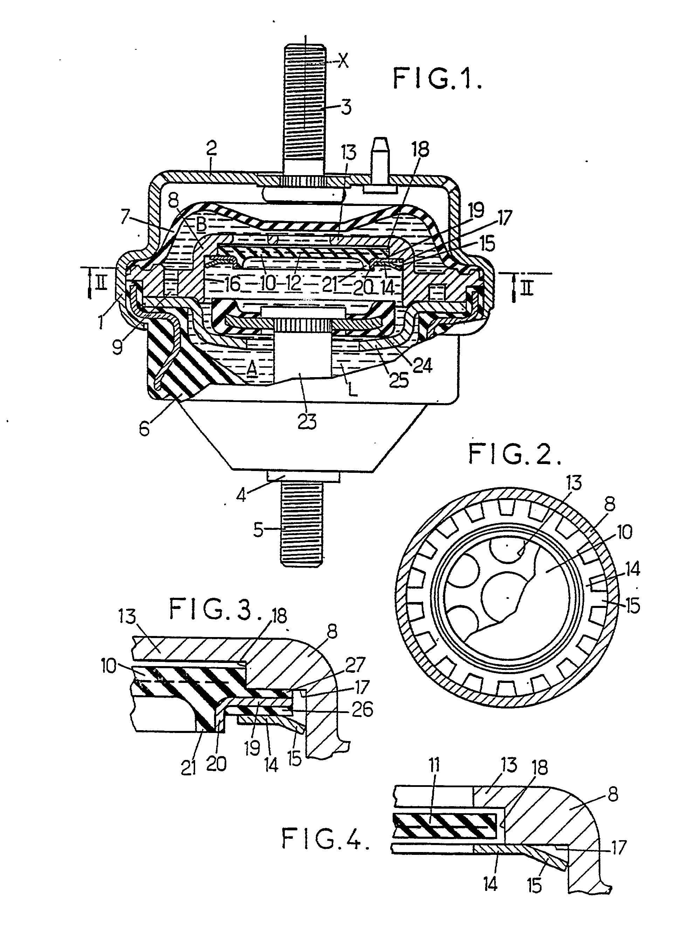

Le pourtour de ce clapet peut être raccordé de façon étanche au restant de la cloison 8 par une portion de feuille déformable : c'est le cas pour le clapet 10 illustré sur les figures 1 et 3.

Mais ce n'est pas le cas pour la variante, qui sera décrite plus loin à propos de la figure 4, pour laquelle le clapet 11 est mobile entre deux portées rigides.

Dans chaque cas, les amplitudes des débattements axiaux du clapet sont limitées à une faible valeur, de l'ordre de 0,5 mm : à cet effet, une armature 12 peut être incorporée au clapet 10 dans le cas de la feuille déformable ; dans les autres cas, ces limitations sont souvent obtenues par butée du clapet contre des grilles ou plaques perforées dont les portées ci-dessus forment les pourtours.

Une masse liquide L remplit des chambres A et B ainsi que le canal 9, et le clapet 10,11 est immergé dans cette masse liquide.

Comme bien connu, l'existence de ce clapet permet de filtrer la transmission de certaines vibrations indésirables de l'un des éléments rigides à l'autre, du fait des débattements alors imposés audit clapet par ces vibrations indésirables.

L'invention se propose de simplifier le montage dudit clapet.

Ce montage est assuré en emprisonnant axialement le clapet entre :
- d'une part une première portée rigide 13 qui est comprise d'une façon connue en soi par la portion rigide de la cloison intermédiaire 8, portée notamment constituée par une grille ou plaque performée,
- et d'autre part une rondelle plate 14 prolongée extérieurement par une couronne de pattes 15 s'étendant selon un tronc de cône ou analogue et prenant appui avec un effet d'arc-boutement axial contre une face cylindrique interne 16 comprise par la portion rigide de la cloison 8.

La conicité de la couronne de pattes 15 est orientée de façon telle que ces pattes s'étendent axialement du côté, de la rondelle 14, opposé à celui où se trouve le clapet.

Pour assurer l'effet d'arc-boutement, on donne au diamètre extérieur de la couronne de pattes 15, avant mise en place de celle-ci, une valeur légèrement supérieure au diamètre de la face cylindrique interne 16.

Cette face 16 est ouverte axialement vers le bas de façon à pouvoir recevoir par simple glissement axial la rondelle 14,15.

Son extrémité supérieure est prolongée vers l'axe X par une plage annulaire transversale 17 servant de butée axiale de fin de course à ladite rondelle et formant, avec une face cylindrique 18 qui entoure le clapet, un gradin annulaire qui borde inférieurement la portée 13.

Dans le premier mode de réalisation illustré sur les figures 1 et 2, le clapet 10, constitué par la portion centrale, de préférence rigidifiée, d'une feuille légèrement déformable, porte, adhérée sur la périphérie de sa face inférieure, une bague métallique 19.

Cette bague 19 déborde radialement vers l'extérieur par rapport au clapet 10 de sorte qu'elle peut être appliquée axialement vers le haut contre le gradin 17,18.

Ladite bague 19 est prolongée intérieurement par un bord 20 rabattu vers le bas, ce qui lui confère une certaine rigidité tout en facilitant le centrage relatif entre elle-même et la rondelle 14,15.

Ce bord 20 est lui-même longé intérieurement par une nervure inférieure 21 venue de moulage avec le clapet 10.

Le montage de ce clapet 10 sur la cloison 8 est le suivant.

On commence par mettre en place ledit clapet dans le logement délimité axialement par la portée 13 et radialement par la face cylindrique interne 18.

Puis on met en place la rondelle 14,15 contre la cloison 8 en la faisant glisser axialement le long de la face 16, moyennant un faible effort apte à plier légèrement les pattes 15, et ce jusqu'à double butée de ladite rondelle contre la bague 19 et de cette bague contre le gradin 17,18.

Le montage du clapet 10 sur la cloison 8 est alors achevé et il est quasiment irréversible en raison de l'accrochage par arc-boutement qui est obtenu entre les tranches des pattes 15 et la face cylindrique interne 16.

On voit encore sur la figure 1 :
- un pied 23 solidaire de l'embase 4 et plongeant dans la chambre A, pied terminé par un sabot débordant radialement 24,
- et une armature 25 également immergée dans la chambre A et propre à entourer avec jeu le pied 23, le diamètre de l'ouverture évidée dans cette armature 25 étant inférieure à celui du sabot 24.

Cette mesure, connue en soi, permet d'éviter la destruction du support par arrachement axial, une telle sollicitation se traduisant par l'application axiale du sabot 24 contre l'armature 25.

La variante illustrée sur la figure 3 diffère de la précédente uniquement par le fait que des coussins élastiques sont prévus respectivement :
- en 26, entre la rondelle 14,15 et la bague 19,
- et en 27, entre ladite bague 19 et la portée transversale 17.

Cette construction assure un montage plus souple du clapet sur son siège.

Enfin, dans l'autre variante représentée sur la figure 4, le clapet 11 n'est pas raccordé de façon étanche au reste de la cloison 8, mais peut se déplacer librement, selon la direction axiale, entre deux portées rigides.

La première de ces portées est constituée comme précédemment par une portion perforée centrale 13 de la cloison 8.

Quant à la seconde portée, elle est ici directement constituée par la rondelle 14,15, appliquée axialement contre la plage annulaire transversale 17.

Ladite rondelle 14,15 peut présenter une faible largeur radiale.

Elle peut également être constituée par le périphérie d'une plaquette perforée.

## Revendications

1. Dispositif antivibratoire destiné à être interposé aux fins de support et d'amortissement entre deux éléments rigides, constitué par un boîtier étanche comportant une embase rigide (4) solidarisable avec l'un des deux éléments rigides, un anneau rigide (1) solidarisable avec l'autre élément rigide, une paroi élastique annulaire de support (6) reliant de manière étanche l'embase à l'anneau et une membrane flexible (7) raccordée de manière étanche à l'anneau, l'intérieur de ce boîtier étant divisé par une cloison intermédiaire (8) en deux chambres, savoir une chambre de travail (A) du côté de la paroi annulaire et une chambre de compensation (B) du côté de la membrane, des deux chambres communiquant entre elles en permanence par un passage étranglé (9), une masse liquide (L) remplissant les deux chambres ainsi que le passage étranglé, et la cloison intermédiaire comprenant une portion mobile ou déformable (10 ou 11) formant "clapet" flottant, deux portées rigides encadrant axialement le pourtour du clapet, et éventuellement des moyens complémentaires (12) pour limiter l'amplitude des débattements du clapet, caractérisé en ce que l'une des deux portées rigides est constituée par une rondelle métallique (14,15) prenant appui radialement contre une face cylindrique interne (16) d'une pièce annulaire rigide (8) solidaire de l'autre portée (13), ladite rondelle étant constituée par un anneau plat (14) prolongé vers l'extérieur par une couronne de pattes (15) s'étendant sensiblement selon un tronc de cône et dimensionnée de façon telle que le contact entre ces pattes et la face cylindrique en regard (16) fasse intervenir un léger fléchissement de celles-ci et un effet d'arc-boutement.

2. Support selon la revendication 1, caractérisé en ce que l'autre portée (13) fait partie de la pièce annulaire rigide (8) contre une face cylindrique interne (16) de laquelle prend appui la rondelle (14,15).

3. Support selon l'une quelconque des revendications 1 et 2, caractérisé en ce que la rondelle métallique (14,15) constitue la périphérie d'un disque perforé.

4. Support selon l'une quelconque des précédentes revendications, caractérisé en ce que, dans le cas où le clapet est constitué par une feuille déformable étanche (10), le pourtour de ce clapet est revêtu par une bague rigide (19) contre laquelle prend appui la rondelle (14,15).

## Patentansprüche

1. Hydraulisch gedämpftes Lager, das zur Abstützung und zur Dämpfung zwischen zwei starren Elementen eingefügt ist und aus einem dichten Gehäuse besteht mit einem starren Verbindungsstück (4), das an einem der starren Elemente anbringbar ist, einem starren Ring (1), der an dem anderen Element anbringbar ist, einer ringförmigen elastischen Stützwandung (6), die das Verbindungsstück dicht mit dem Ring verbindet und einer biegsamen Membran (7), die dicht mit dem Ring verbunden ist, wobei der Innenraum des Gehäuses durch eine dazwischenliegende Trennwand (8) in zwei Kammern, nämlich eine Arbeitskammer (A) auf der Seite der ringförmigen Wandung und eine Kompensationskammer (B) auf der Seite der Membran unterteilt ist, die beiden Kammern miteinander dauernd über eine verengte Durchgangsöffnung (9) miteinander in Verbindung stehen, die beiden Kammern sowie die verengte Durchgangsöffnung mit einem flüssigen Medium (L) gefüllt sind und die Trennwand einen beweglichen oder deformierbaren Abschnitt (10 oder 11), der ein schwimmendes oder flatterndes "Ventil" bildet, zwei starre Anschläge, zwischen denen der äußere Umfang des Ventils axial eingeschoben ist, und gegebenenfalls Mittel enthält, um die Amplitude der Schwingungen des Ventils zu begrenzen, dadurch gekennzeichnet, daß einer der beiden starren Anschläge aus einem Metallring (14, 15) besteht, die in radialer Richtung gegen die innere zylindrische Oberfläche (16) eines starren ringförmigen Werkstückes (8) anliegt, das fest mit dem anderen Anschlag (13) verbunden ist, wobei der Metallring aus einem flachen Ring (14) besteht, der nach außen hin durch einen Kranz von Laschen (15) verlängert ist, die sich im wesentlichen kegelstumpfförmig erstrecken und so dimensioniert sind, daß der Kontakt zwischen den Laschen und der gegenüberliegenden zylindrischen Oberfläche (16) zu einer leichten Biegung der Laschen führt und die Wirkung einer bogenförmigen Einspannung auftritt.

2. Lager nach Anspruch 1, dadurch gekennzeichnet, daß der andere Anschlag (13) ein Teil des starren ringförmigen Werkstückes (8) ist, gegen dessen innere zylindrische Oberfläche (16) der Ring (14, 15) anliegt.

3. Lager nach einem der Ansprüche 1 und 2, dadurch gekennzeichnet, daß der Metallring (14, 15) den äußeren Umfang einer mit Löchern versehenen Scheibe bildet.

4. Lager nach einem der vorhergehenden Ansprüche, dadurch gekennzeichnet, daß der äußere Umfang des Ventils durch einen starren Ring (19) verstärkt ist, gegen den sich der Ring (14, 15) abstützt, wenn das Ventil aus einer deformierbaren dichten Folie (10) besteht.

## Claims

1. Antivibratory device intended to be fitted for support and damping purposes between two rigid elements, formed by a sealed case comprising a rigid base (14) able to be fixed to one of the two rigid elements, a rigid ring (1) fixable to the other rigid element, a resilient annular support wall (6) sealingly connecting the base to the ring and a flexible membrane (7) connected sealingly to the ring, the inside of this case being divided by an intermediate dividing wall (8) into two chambers, namely a work chamber (A) on the annular wall side and a compensation chamber (B) on the membrane side, these two chambers communicating with each other permanently through a restricted passage (9), a liquid mass (L) filling the two chambers as well as the restricted passage, and the intermediate dividing wall comprising a mobile or deformable portion (10 or 11) forming a floating "valve", two rigid surfaces axially surrounding the periphery of the valve and possibly complementary means (12) for limiting the amplitude of the free movements of the valve, characterized in that one of the two rigid surfaces is formed by a metal washer (14, 15), bearing radially against an internal cylindrical face (16) of a rigid annular piece (8) secured to the other surface (13), said washer being formed by a flat ring (14) extended outwardly by a circle of lugs (15) extending substantially in the form of a truncated cone and dimensioned so that the contact between these lugs and the opposite cylindrical face (16) causes a slight bending thereof and a buttressing effect.

2. Support according to claim 1, characterized in that the other surface (13) forms part of the rigid annular piece (8) against an internal cylindrical face (16) of which the washer (14, 12) bears.

3. Support according to any one of claims 1 and 2, characterized in tat the metal washer (14, 15) forms the periphery of a perforated disk.

4. Support according to any one of the preceding claims, characterized in that, in the case where the valve is formed by a sealed deformable foil (10), the periphery of this valve is provided with a rigid ring (19) against which the washer (14, 15) bears.

EP 0 305 246 B1

FIG.1.

FIG.2.

FIG.3.

FIG.4.